# EUROPEAN PATENT APPLICATION

(11) **EP 1 256 483 A2**
(43) Date of publication of application: **13.11.2002**
(21) Application number: 02008960.3
(22) Date of filing: 22.04.2002
(51) Int. Cl.: B60N 2/00

(54) **Seat occupancy sensor incorporated into a substrate and method of incorporating a wiring pattern into a substrate**

(30) Priority: 10.05.2001 EP 01401196
(71) Applicant: Tyco Electronics France SAS, 95300 Pontoise (FR)
(72) Inventor: Kugener, Stephane, 75014 Paris (FR)
(74) Representative: Hirsch, Peter, Dipl.-Ing.

(57) **Abstract**

A seat occupancy sensor for detecting the presence of a body or object, e.g. on a motor vehicle front seat, includes a soft and yielding substrate (4), on the top surface of which is provided a wiring pattern (7). The wiring pattern is comprised of a plurality of pairs of electrical wires (6a, 6b; 6a', ...). Each pair of electrical wires defines a capacitive element (6, 6', 6"). Each capacitive element is connected to a detector circuitry via a connecting wiring (10).

## Description

The present invention is related to a seat occupancy sensor incorporated into a substrate consisting of a soft and yielding material. Moreover, the present invention relates to a method of incorporating a wiring pattern into a substrate, which consists of a soft and yielding material.

It is often desired to detect the presence of a body (of any type) in the vicinity of a detecting region. For example, it is known to detect the presence of a finger of a person on the surface of a touch panel wherein a plurality of capacitive elements are formed below such surface. A first potential is applied to a first electrode of each capacitive element, and a second potential is applied to the second electrode of each capacitive element. Thereby, an electrostatic field is formed. If a finger is pushed against the surface under which such capacitive elements are provided, the intensity of said electrostatic field is varied. Such variation of the electrostatic field can be detected by monitoring the capacitance value of the plurality of capacitive elements.

It is well-known to use seat occupancy sensors for detecting the presence of a person on the seat utilizing the above principle of capacitive sensor elements. For example, the information about whether or not a person is on the seat may be used to switch on/off certain electrical appliances. The seat may be provided with a seat heater, and the seat heating may be switched on responsive to detecting the presence of a person on the seat. Also the airbag actuating force may be adjusted depending on the body presence, mass and or position.

The information signal provided by a seat occupancy sensor may also be used for switching on/off a light source illuminating the passenger compartent of a vehicle.

An object of the present invention is to provide for a seat occupancy sensor incorporated into a substrate consisting of soft and yielding material which can easily be incorporated into the substrate without the risk of damaging the substrate.

A further object of the invention is to provide for a seat occupancy sensor which is reliable and break resistant even if it is frequently deformed by a body acting upon the substrate and the components of the seat occupancy sensor.

An additional object of the invention is to provide for a method of incorporating a wiring pattern into a substrate, which consists of a soft and yielding material.

To achieve these and other objects, the present invention provides for a seat occupancy sensor incorporated into a substrate consisting of a soft and yielding material and adapted to detect the presence of a body. The seat occupancy sensor has an electrically conducting wiring pattern, which defines at least one capacitive element having a certain capacitance value. The capacitance value is dependent on whether or not a body is or is not present in the vicinity of the wiring pattern, detector circuitry is also provided for detecting the capacitance value and issuing a detection signal. An evaluation circuit is responsive to the detection signal to issue a body presence signal. The wiring pattern has at least one wire fixed to one surface of the substrate by an elastic sewing thread.

The electrically conductive wire may be made of any conductive material such as copper.

To form a capacitive element, are provided a first and a second electrically conductive wire, each first and second conducting wire forming one capacitive element. A first potential may be applied to the first wire defining a first electrode of a capacitive element, while a second potential is applied to the second wire defining a second electrode of the capacitive element. Due to the potential difference between the first and the second wire, an electrostatic field is formed. Such electrostatic field is deformed when a body or object, e.g. a body of a human being, approaches the location of said wires. Due to the change of the electrostatic field, the capacitance value of the capacitor, which is formed by the first and second wire, is changed. The capacitance can be detected by detector circuitry, the structure and function of which is known to the person skilled in the art.

A plurality of capacitive elements may be defined by a plurality of wiring patterns. Thereby, the presence of a body, the total mass thereof and/or the position of the passenger or the driver or all three can be obtained by appropriate signal evaluation.

The substrate including the wiring pattern constitutes a component of the seat cushion and/or the backrest of a seat, the wiring pattern might be damaged if great stress is applied to the electrically conductive wire while the mass of a body substantially deformes the wire.

So as to avoid breaking of the electrically conductive wire or wires, it is preferred that the wire defines a sinusoidal pattern or a rectangular wave pattern. Thereby, the shape of the wire pattern may be deformed without applying substantial stress in the longitudinal direction of the electrically conducting wire. The electrically conductive wire may be coated with an electrically insulating varnish.

It is possible to use a very thin copper wire coated with a thin insulating varnish as a "lower sewing thread" loaded into the spool member incorporated into a base member of a common sewing machine. One may easily choose one of plural possible stitch patterns or "knots" in such a manner that the electrically conductive wire feed from said spool to the lower surface of the substrate placed on the base member of the sewing machine is not substantially deformed during the sewing process. Fixing of the wire is obtained by an elastic sewing thread made of cotton, polyethylene (PE) or the like. The sewing thread is fed from the bobbin supported on the arm member of the sewing machine to the needle of the sewing machine.

During the sewing operation, the needle penetrates the soft and yielding substrate consisting of, for example, synthetic foam material. When the tip of the needle is beneath the bottom surface of the substrate, it grips the electrically conductive wire and draws it against the lower surface of the substrate during the upward movement of the reciprocating needle. Thereby, the electrically conducting wire is fixed within the plane defined by the lower surface of the substrate. Since the wire is not substantially deformed during the sewing process, breakage of the wire is avoided.

The above explained run of the wire and the run of the sewing thread may be easily defined by appropriate programming of an automatic, programmable pattern defining means, which is incorporated into the sewing machine. Such programmable pattern defining means are incorporated in substantially all modern sewing machines.

Each capacitive element or each of a plurality of capacitive elements defined by the wiring pattern are connected to the detector circuitry by means of a connection wiring. The connection wiring is provided on the top surface of a connection wiring carrier, which is may be a MYLAR strip. So as to avoid the occurance of erronous signals, a pair of aluminium foils can also be provided on the bottom and top surface of the connection wiring.

The present invention also discloses and claims a method of incorporating a wiring pattern into a substrate, which consists of a soft and yielding material.

First, a sewing machine is provided including a sewing thread bobbin. The sewing thread is fed to a reciprocating needle of the sewing machine. The sewing machine also includes a spool, which is rotatably mounted in a base member of the sewing machine. The spool is loaded with an electrically conductive wire.

The substrate is placed on the base member between the needle and the spool.

Finally, the wire is sewn to that surface of the substrate which faces the base member.

The above method may be used for making a component of the seat occupancy sensor of the present invention, by using a sewing machine having an automatic and programmable pattern defining module.

The invention will now be described by of example with reference to the accompanying figures of which:
Figure 1 is a perspective view of a component of a seat occupancy sensor according to one embodiment of the present invention;
Figure 2 is a block diagramm of components of the seat occupancy sensor according to the embodiment of the invention shown in Figure 1;
Figure 3 is a perspective section view of a part of the structure shown in Figure 1;
Figure 4 is a cross-section view of an electrically conductive copper wire provided with a coating varnish; and
Figure 5 is a schematic diagram showing a common well-known sewing machine used for incorporating an electrically conductive wire into the plane defined by one surface of a soft and yielding substrate.

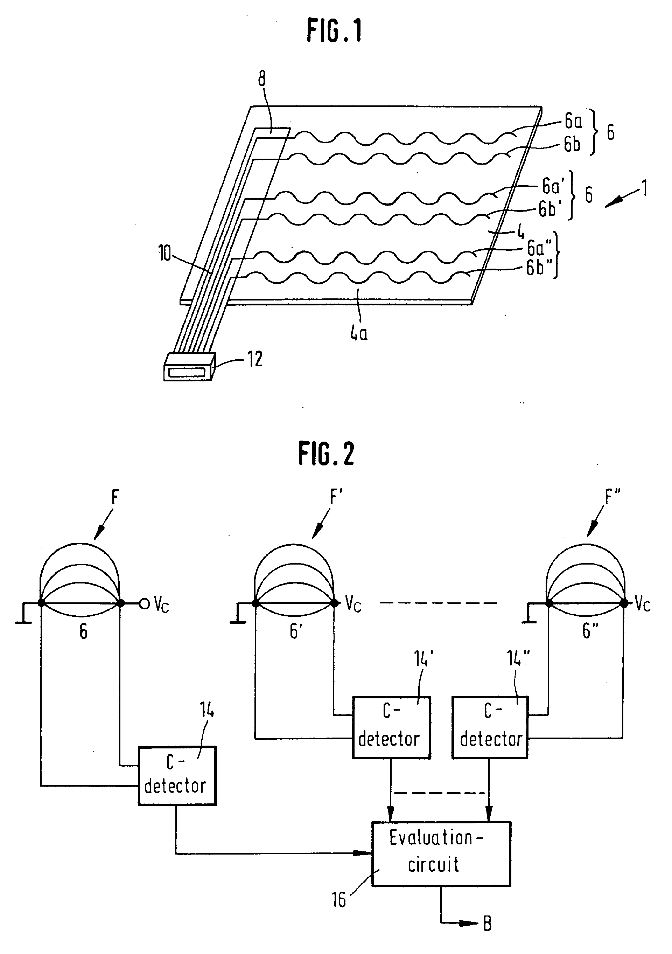

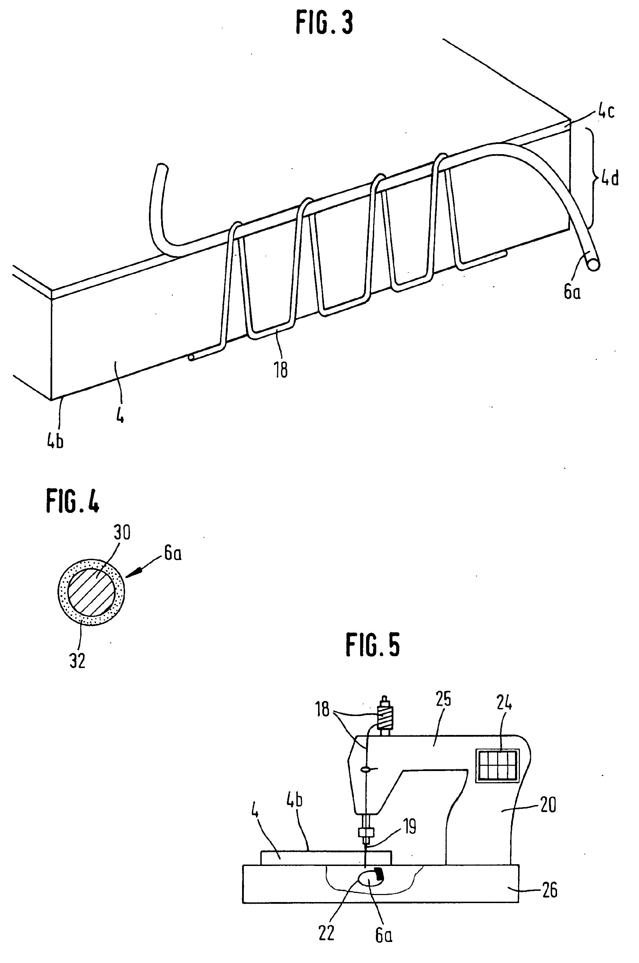

Figure 1 shows the main components of a seat occupancy sensor 1. There is provided a substrate 4 comprised of a soft and yielding material, here embodied by a sheet of foam material. As shown in Figure 3, substrate 4 comprises a layer 4d consisting of synthetic foam, covered by a fabric textile lining 4c, the top surface of which defines the top surface 4a of the overall substrate 4. Reference number 4b designates the lower surface 4b of the substrate.

Referring back to Figure 1, a wiring pattern is formed on the top surface 4a. The wiring pattern is defined by three pairs of insulated copper wires 6a, 6b, 6a', 6b' and 6a", 6b". These pairs of copper wires define a first capacitive element 6, a second capacitive element 6' and a third capacitive element 6".

Each wire 6a, 6b, ... is fed to a connector 12 by means of a connection wiring 10, which include a plurality of linear wirings provided on the top surface of a connection wiring carrier 8. The connecting wiring carrier 8 comprises a MYLAR strip. Even though not shown in Figure 1, the connection wiring carrier 8 and the connection wiring 10 are shielded by bottom aluminium foil and a top aluminium foil sandwiching the connection wiring 10 and the wiring carrier therebetween.

As shown in Figure 2, each capacitive element 6, 6', 6" is connected to a pair of potentials. The left hand wire of each capacitive element is connected to ground, the corresponding wire of each capacitive element is connected to a positive voltage source Vc. Due to the potential difference between the wires of each capacitive element 6, 6' and 6", an electrostatic field is formed. In Figure 2, each electrostatic field F, F' and F" is shown in the form of field lines connecting the two wires of each capacitive element 6, 6' and 6".

A capacitance detector (C detector) 14, 14' and 14" is connected to one of the capacitive elements 6, 6' and 6", respectively. Those skilled in the art understand that the capacitance detectors can detect the capacitance value of each capacitive element 6, 6' and 6". If a body is present in the vicinity of one or plural or all of the capacitive elements 6, 6' and 6", the capacitance value thereof changes. Such change of the capacitance value will be detected by the corresponding capacitance detector 14, 14' and 14".

An evaluation circuit receives the output signal of the capacitance detectors 14, 14' and 14". For example, the evaluation circuit calculates the position of the driver (or passenger) and/or the body mass and/or determines the presence of a person. These signals can preferably be used to control an air bag system of a car. The evaluation circuit issues, for example, a "body presence signal" which is indicative of the presence of a body on the seat in which the structure shown in Figure 1 is mounted.

Referring back to Figure 1, the substrate 4 shown in the figure will be deformed when the weight of a body acts substantially perpendicularly with respect to the plane of the substrate. So as to avoid breaking of any of the wires 6a, 6b, ..., the wires are in the shape of a sine-curve wherein each wire of a pair of wires 6a, 6b and 6a', 6b' and 6a", 6b" are substantially parallel to each other.

The wires 6a, 6b, ... shown in Figure 1 have substantially identical cross-sections and are made from the same type of wire.

Figure 4 shows a cross-section of wire 6a, representative for each of the wires shown in Figure 1. As shown, wire 6a comprises a core 30 made of copper and a coating 32 consisting of a small layer of a varnish. The varnish constitutes an insulating material.

Figure 3 is a cross-section through substrate 4. The electrically conductive wire 6a lies substantially within a plane defined by the top surface 4a of substrate 4. Wire 6a is fixed to the top surface 4a by means of a sewing thread 18. The wire 6a and the sewing thread 18 are fixed to substrate 4 by means of a common sewing machine.

Figure 5 is a schematic diagram showing a sewing machine 20, which includes a base member 26 and an arm 25. As shown, a programming keyboard 24 is provided in the housing of the arm 25. The programming keyboard may be used to designate one of a plurality of stitch patterns, which will be automatically made by the sewing machine when the machine is operated in a well-known manner.

On top of the arm 25 there is provided a bobbin of a sewing thread 18. The sewing thread 18 is fed to a needle 19. The needle 19 is connected to the reciprocating needle holder.

The base element 26 of the sewing machine 20 supports a spool 22, which is loaded with a reservoir of wire, here shown as a length of wire which constitutes wire 6a of capacitive element 6 shown in Figure 1.

Substrate 4 is placed on the upper surface of the base member 26 with the "upper" surface 4a facing the base member and the "lower" surface 4b of the substrate facing away from the base member. The substrate 4 is positioned between the location of needle 19 and that of spool 22.

Prior to carrying out the sewing process, a sine-curve pattern is programmed via progamming keyboard 24. Then, the sewing machine is operated and it makes a sinusoidal pattern of the copper wire 6a within the plane defined by the top surface 4a of the substrate 4 resting on the upper surface of base member 26. Thereby, wire 6a is fixed to the upper surface 4a of substrate 4 by means of the sewing thread 18.

As shown in Figure 3, the curvatures defined by wire 6a do not include sharp edges, in contrast to sewing thread 18, which consists of cotton or PE.

## Claims

1. A seat occupancy sensor incorporated into a substrate (4) which consists of a soft and yielding material, and adapted to detect the presence of a body or object, comprising:
an electrically conducting wiring pattern (7), which defines at least one capacitive element (6, 6', 6") having a certain capacitance value, the capacitance value being dependent on whether or not a body is or is not present in the vicinity of said wiring pattern (7);
a detector (14, 14', 14") for detecting said capacitance value and issuing a detection signal;
an evaluation circuit, which is responsive to said detection signal and issues a body presence signal, a body position signal and/or a body mass signal,
**characterized in that**
said wiring pattern (7) comprises at least one wire (6a, 6b, ...) fixed to one surface (4a) of said substrate (4) by means of a sewing thread (18).

2. The seat occupancy sensor according to claim 1, wherein a plurality of capacitive elements (6, 6', 6") is provided, each capacitive element comprising a first and a second electrically conducting wire (6a, 6b; 6a', ...).

3. The seat occupancy sensor according to claim 2, wherein the wire (6a, 6b; ...) defines a non-linear pattern.

4. The seat occupancy sensor according to claim 3, wherein the wire defines a sinusoidal pattern or a rectangular wave pattern.

5. The seat occupancy sensor according to claim 2, wherein the wire is a copper wire.

6. The seat occupancy sensor according to claim 2, wherein the wire is coated with an electrically insulative varnish (32).

7. The seat occupancy sensor according to claim 1, wherein said sewing thread (18) comprises cotton or polyethylene (PE).

8. The seat occupancy sensor according to claim 1, wherein the wiring pattern (7) and a run of the sewing thread (18) are defined by a sewing machine (20) having an automatic, programmable pattern defining means (24).

9. The seat occupancy sensor according to claim 1, wherein the substrate comprises a sheet (4d) of foam material having a textile fabric lining (4c), the wiring pattern (7) being provided on the surface (4a) of said texile fabric lining (4c).

10. The seat occupancy sensor according to claim, wherein the wiring pattern (7) is connected to said detector (14, 14', 14") by means of a connection wiring (10).

11. The seat occupancy sensor according to claim 10, wherein the connection wiring (10) is attached to a connector wiring carrier (8), which is fixed to the substrate (4).

12. The seat occupancy sensor according to claim 1, wherein the substrate comprises a sheet of foam material.

13. The seat occupancy sensor according to claim 1, wherein the substrate comprises a piece of cloth.

14. The seat occupancy sensor according to claim 1, wherein the substrate comprises a thermal adhesive on top of a foam sheet.

15. Method of incorporating a wiring pattern (7) into a substrate (4), which consists of a soft and yielding material, comprising the steps of:
providing a sewing machine (20) including a sewing thread bobbin, the sewing thread (18) being fed to a reciprocating needle (19) of the sewing machine (20), the sewing machine also including a spool (22), which is rotatably mounted in a base member (26) of the sewing machine, the spool (22) being loaded with an electrically conductive wire (6a, 6b, ...);
placing said substrate (4) on said base member (26) between said needle (19) and said spool (22); and
sewing said wire to that surface (4b) of the substrate (4) which faces said base member (26).

16. The method of claim 13, wherein said sewing machine has an automatic and programmable pattern defining means (24), and wherein the method includes the step of programming a sinusoidal or a rectangular wave pattern.
